# EUROPEAN PATENT SPECIFICATION

(11) **EP 1 387 456 B1**
(45) Date of publication and mention of the grant of the patent: **09.09.2009**
(21) Application number: 03016447.9
(22) Date of filing: 21.07.2003
(51) Int. Cl.: H02G 3/06, H02G 3/08

(54) **Sealing device**
Dichtungsvorrichtung
Dispositif d'étanchéité

(30) Priority: 02.08.2002 DE 10235499
(43) Date of publication of application: 04.02.2004
(73) Proprietor: Tyco Electronics AMP GmbH, 64625 Bensheim (DE)
(72) Inventor: Woller, Josef, 64347 Griesheim (DE); Mechteridis, Dimitrios, 68723 Oftersheim (DE)
(74) Representative: Grünecker, Kinkeldey, Stockmair & Schwanhäusser Anwaltssozietät

(56) References cited:
- EP-A- 0 546 288
- DE-B- 1 650 025
- US-A- 4 525 000

## Description

The present invention relates to a sealing device for sealing a line relative to a line duct. The line is introducible at least partially into the line duct. A substantially tubular seal is disposed between the line and the line duct. The present invention further relates to a plug-in connector, which is connected to the line duct and comprises a sealing device.

Such sealing devices are generally used to protect components from the penetration of liquids, gases and/or impurities or to prevent gases or liquids from escaping from the component. In DE-OS 199 21 311 A1 such a sealing device is shown, which comprises a seal and a screw-down nut. The sealing between the line duct, for example a wall part of a housing, and the line, such as for example cables, pipes and similar elongate shaped parts, is achieved by pressing the smooth seal walls against the line, and the line duct.

With these sealing devices, however, reliable sealing of the line, mechanical strain relief of the line in the duct and possible rotation of the seal and the line are often problematic because greater manufacturing tolerances, particularly during manufacture of the seal, may lead to an inadequate mechanical contact between the seal and the respective wall of line and line duct.

US 4,525,000 discloses a cable fitting with a variable inner diameter grommet assembly. The grommet assembly through which a cable may be introduced, consists of two different parts: one part is the grommet with an outside taper, which is in contact to the opening of the line duct. The grommet assembly further comprises as the other part a removable insert, which is a tube that carries the grommet and is in contact to the cable.

From DE 201 16 680 U1 a strain relief for a cable gland is known, wherein an O-ring fixed within an annular grove is provided as a sealing element. A formed part, which carries the O-ring, is provided with an anti-rotation element in order to avoid a rotation of the formed part against the pipe socket to which the formed part is mounted.

US 5,068,494 relates to a conduit connector for an eccentrically dimensioned conduit. According to this document, a connector for connecting a flexible, eccentrically dimensioned conduit to an electrical fixture comprises a connector cap and body portions. The connector cap has a threaded metal collar portion and a plastic floating sleeve with an extending wedging ring. The mating threaded metal connector body has a deflection ramp and an internally secured plastic sleeve support. The connector body is secured to an electrical fixture and the connector cap is loosely threadably engaged with the connector body. The conduit is inserted through an opening in the connector cap until it abuts the bottom of an annular cavity defined between the connector body upper wall and a sleeve support. The cap is then tightly screwed onto the body such that the wedging ring is cammed by the deflection ramp, into engagement with the conduit to securely grip the conduit. This arrangement is intended to provide a liquid-tight seal. The collar and the floating sleeve portion of the connector cap may move laterally and pivotably with respect to one another so that the connector may accommodate the eccentrically dimensioned conduit and relieve stress imposed by flexing of the conduit during use. Provision is made in the connector design to minimize twisting of the conduit while engaged by the connector assembly.

An object of the present invention is accordingly to provide an improved sealing device for sealing between a line and a line duct and/or an improved strain relief for the line.

This and other objects are achieved according to the invention by the subject matter of the independent claims. Advantageous developments of the invention are the subject matter of several sub-claims.

The present invention is based on the finding that sealing lips on the inner and/or outer wall of the seal may contribute substantially toward reliable sealing. The sealing lips effect improved sealing between the line duct and the seal and/or the seal and the line, which leads as a whole to an improvement of the overall sealing of the sealing device and its reliability. The sealing device further enables improved strain relief due to the increased friction. By virtue of the described properties it is possible by means of the solution according to the invention to create sealing devices, which result in reliable sealing and the use of which for example in a plug-in connector provides particularly good strain relief of the line.

In a preferred embodiment the seal comprises a plurality of approximately equidistantly disposed sealing lips on the inner wall and/or outer wall. By using a plurality of sealing lips it is possible to achieve a "multistage" sealing of the line relative to the seal and/or of the seal relative to the line duct. A plurality of sealing lips moreover has the effect of increasing the friction, which may be utilised for a further improvement of the strain relief

By means of a screw-down nut, which may be provided in the sealing device, mechanical pressure may be exerted on the seal transversely relative to the longitudinal axis of the line duct. Twisting of the line relative to the line duct may be prevented in that the screw-down nut presses the sealing device firmly against the line and the friction between sealing device and line prevents twisting thereof. At the same time, the applied pressure effects strain relief of the line. The last-mentioned advantage in particular is of special importance in the case of the leading through of electric cables, for example of a sealed connection of cable and plug-in connector.

In order to achieve a mechanically secure and also releasable connection of the screw-down nut to the line duct and guarantee ease of assembly, it is meaningful to provide screw-down nut and line duct at the appropriate points with a thread and hence enable their screw connection. Threads facilitate not only assembly but also the maintainability of the line duct, for example in a situation where it is necessary to exchange a seal that has become porous.

A rotation of the seal and of the cable about their longitudinal axis, caused for example by attachment of the screw-down nut, gives rise to a high mechanical load and may therefore, for example in the case of use of the sealing device in an electrical plug-in connector, in which the electric cable is contacted by means of a crimp connection, lead to twisting-off of the crimp connection. According to a further preferred embodiment the seal therefore has an anti-rotation element to prevent rotation of the seal and of the line relative to the line duct.

It is advantageous for the anti-rotation element to be formed by an interlock between seal and line duct. In said case, it is already sufficient when the interlock is formed by a projection and a corresponding notch.

According to a further advantageous embodiment the seal comprises a circumferential stop projection, for bringing an end face into abutment with the line duct. Said stop projection may advantageously be utilised to form the anti-rotation element. Furthermore, by means of the stop projection the seal may also be fixed better in its position relative to the longitudinal axis.

It is further advantageous to select the dimensions of the profiles of the line, the line duct and the seal in such a way that on their connection, an interference fit is achieved. This makes it possible to reduce the clearances between the individual elements and hence additionally achieve an improvement of the imperviousness of the sealing device.

The advantageous properties of the line duct may be used to particular effect in a plug-in connector, on which a cable gland (cable duct) and/or line duct is provided, which is sealed relative to a cable. According to an advantageous embodiment it is meaningful that the plug-in connector and a corresponding mating component likewise establish a sealed connection in order by said means to ensure sealing of the entire connection.

The invention is described in detail below with reference to the embodiments which are illustrated in the accompanying drawings. Similar or corresponding details are provided with the same reference numerals in the drawings. In the drawings:
Fig. 1 shows a side view of a plug-in connector with a sealing device according to the invention;
Fig. 2 shows a detail shown in section along the cutting line A-A of the plug-in connector with a sealing device according to the invention;
Fig. 3 shows a perspective view of the seal;
Fig. 4 shows a perspective view of the plug-in connector of Fig. 1.

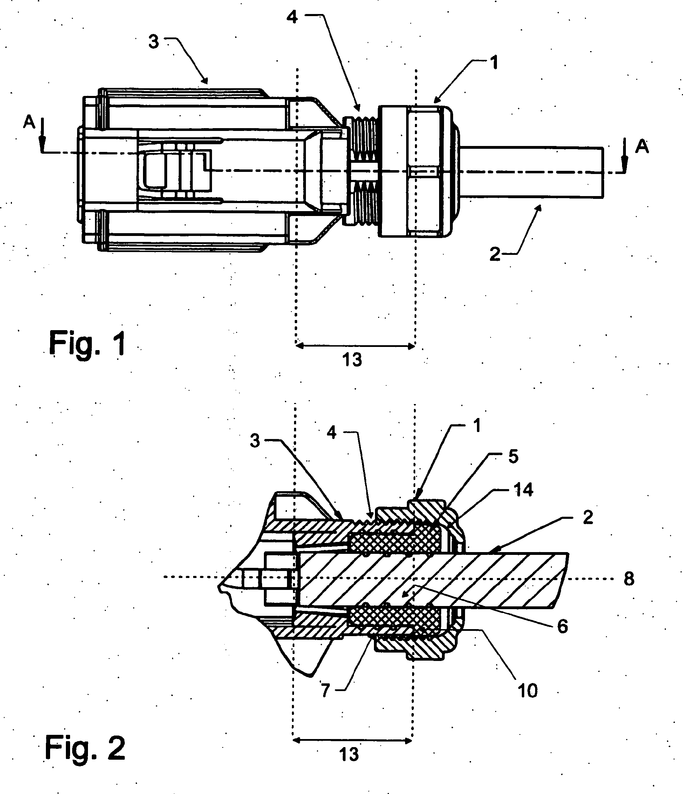

Fig. 1 shows the side view of a sealed plug-in connector with a sealing device according to the invention. Attached to the housing 3 is a line duct 13, through which an electric cable 2 extends. The sealing device according to the invention may of course also be used with line ducts 13, which are attached to a device housing or are a pipe coupling piece, for example for connecting two pipes in a sealed manner to one another. Provided on the line duct 13 is a thread 4, which may be screw-connected to a screw-down nut 1.

Fig. 2 shows a detail of the plug-in connector of Fig. 1 in a sectional view taken along the line A-A of Fig. 1. In the embodiment, the line duct 13 partially surrounds the seal 5. The seal 5 in turn encloses the line 2. By screwing the screw-down nut 1 onto the thread 4 the housing part provided with the thread 4 is pressed together with the seal 5 and the seal in turn is pressed together with the line 2 transversely relative to the longitudinal axis 8.

By virtue of a bevel 14, the seal 5 is pressed by the screw-down nut 1 against the housing 3 also in a direction parallel to the longitudinal axis 8 and the seal 5 is thereby fixed. For the functionality of the sealing device, it is not absolutely necessary to use a screw-down nut 1, it being equally possible to exert a radial and/or tangential force by means of other elements, such as for example sleeves with a toggle or clamping sleeves.

The illustrated inner sealing lips 6 and outer sealing lips 7 are pressed by the pressure exerted by the screw-down nut 1 against the line 1 and the housing 3 respectively, with the result that the plug-in connector is sealed. In the embodiment illustrated in Fig. 2 the seal 5 comprises in each case four inner sealing lips 6 and three outer sealing lips 7. It is equally possible to select any other number. The stop projection 10 of the seal 5 fixes the seal 5 in the longitudinal direction by virtue of the tangential force, which is exerted by the screw-down nut.

The internal diameter of the seal 5 is selected in such a way that during assembly the insulated electric cable 2 may be passed through the seal 5. The sealing lips 6, 7 of the seal 5 effect sealing relative to the cable 5 and the line duct 13 respectively through elastic or plastic deformation of the sealing lips, via the pressing force of the screw-down nut 1. Besides the friction locking between the individual elements that is required for this purpose, positive locking may also be used to effect sealing between the line duct 13 and the seal 5. For this purpose, on the inside of the line duct 13 facing the seal 5, grooves may be provided, into which the outer sealing lips 7 engage.

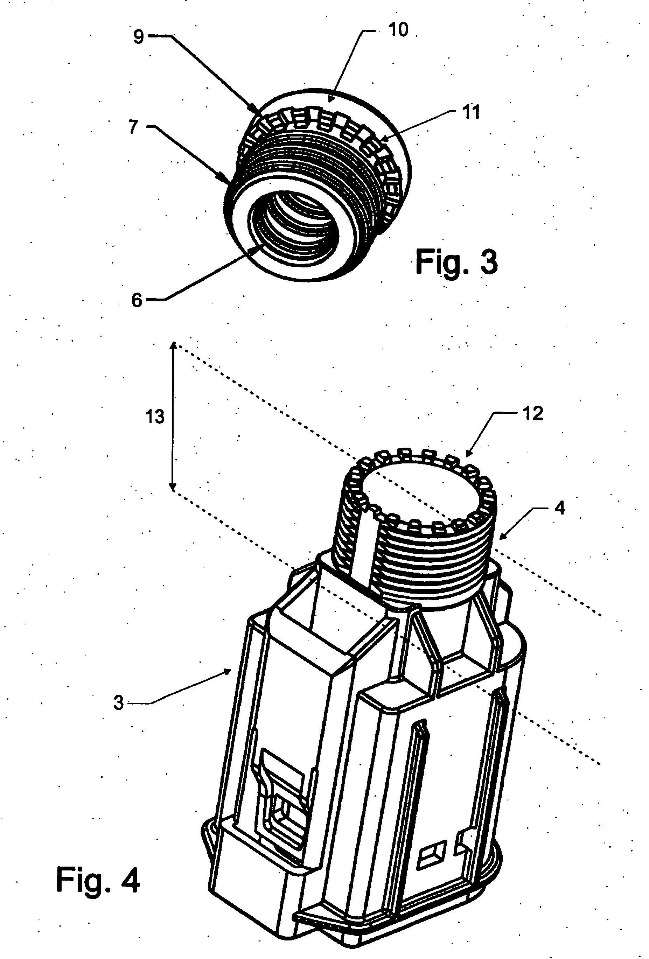

Fig. 3 shows a perspective view of a seal 5 designed in a rotationally symmetrical manner. The stop projection 10 fixes the seal 5 along the longitudinal axis 8 in the housing 3 by virtue of the pressing force exerted by the screw-down nut 1. An anti-rotation element 9 is formed on the side of the stop projection 10 facing the line duct provided on the housing 3. In the illustrated embodiment, the anti-rotation element 9 is formed by an interlock 11, for example a claw-type interlock. Situated along the outer periphery of the seal 5 are the outer sealing lips 7, which effect the sealing relative to the inner wall of the line duct 13. Formed on the inner periphery of the seal 5 are the inner sealing lips 6. The latter, as Fig. 2 reveals, effect sealing of the region of the line 2 located adjacent to the seal 5.

By virtue of an offset arrangement of the inner and outer sealing lips 6, 7 relative to one another it is possible to reduce the material cross-section in the seal 5. It is of course also possible to design the inner sealing lips 6 and outer sealing lips 7 in such a way that they are located opposite one another. On the front of the seal 5, as Fig. 2 also reveals, an insertion phase is formed by a bevel 14 on the outer side of the seal 5, so that the seal 5 may be introduced more easily into the line duct during assembly of the plug-in connector.

For the cross-section of the sealing lips 6, 7 various configurations customary in trade, such as a U shape for example, may be selected. The sealing lips 6, 7 may also be of a gill-shaped design, wherein corresponding bulges on the line duct may engage into the gaps between the gills.

Suitable materials for the sealing lips are materials, which are reliably impervious to liquids, gases and impurities, such as for example silicone rubber mixtures.

Fig. 4 shows the perspective view of the plug-in connector housing of Fig. 1. Situated on the housing 3 is the line duct 13, the free end of which is, in accordance with the rotationally symmetrical seal 5 shown in Fig. 3, shaped in such a way that the end may receive the seal 5 shown in Fig. 3. The interlock 12 is configured in a way that allows it to fit into the interlock 11 embossed on the seal 5. The fact that the seal 5 is joined in a precisely fitting manner to the line duct prevents the seal 5 from being able to twist relative to the line duct of the housing 3 during attachment of the screw-down nut 1.

In order to be able to attach the screw-down nut 1, in the manner shown in Fig. 1, to the line duct of the plug-in connector housing 3, on the outside of the line duct a thread 4 is provided, onto which the screw-down nut 1 may be screwed.

The illustrated plug-in connector housing may be connected in an impervious manner to a non-illustrated mating component so that the inner region of the plug-in connector housing and of its mating component is sealed off.

For assembly of the sealing device, first the end of the line 2 is passed through the screw-down nut in such a way that the nut in the last assembly step may be screw-connected to the thread 4 provided on the housing 3. Then the end of the line 2 is pushed through the seal 5 from the side thereof facing in the stop 10, so that the end of the line 2 projects out of the seal 5. The line with the screw-down nut mounted thereon may then be pushed into the corresponding end of the housing (line duct 13) and fastened by means of the screw-down nut 1.

Although the invention has been described above only in connection with a line duct, which is provided on an electric plug-in connector, and an electric cable, the sealing device may also be used for the sealing of pipes and other elongate shaped parts relative to any desired ducts.

## Claims

1. Sealing device for sealing a line (2) relative to a line duct (13), wherein the line (2) is introducible at least partially into the line duct (13) and a substantially tubular seal (5) is disposed between the line (2) and the line duct (13),
**characterized in**
**that** the seal (5) on its inner wall and/or its outer wall comprises at least one elastically or plastically deformable sealing lip (6, 7) for sealing the seal (5) relative to the line (2) and/or the line duct (13) and
**that** the seal (5) comprises an anti-rotation element (9) which is formed by an interlock (11) between the seal (5) and the line duct (13).

2. Sealing device according to claim 1, **characterized in that** the seal (5) on its inner wall comprises a plurality of sealing lips (6), which are disposed approximately equidistantly.

3. Sealing device according to one of claims 1 or 2, **characterized in that** the seal (5) on its outer wall comprises a plurality of sealing lips (7), which are disposed approximately equidistantly.

4. Sealing device according to any one of claims 1 to 3, **characterized in that** the sealing device comprises a screw-down nut (1), which is connectable to the line duct (13) in such a way that the seal (5) is pressed against the line (2).

5. Sealing device according to claim 4, **characterized in that** the screw-down nut (1) comprises a thread (4), which is screw-connectable to the line duct (13).

6. Sealing device according to any one of claims 1 to 5, **characterized in that** the seal (5) has a rotationally symmetrical shape.

7. Sealing device according to claim 6, **characterized in that** the seal (5) comprises a circumferential stop projection (10), which may be brought into abutment with an end face of the line duct (13).

8. Sealing device according to any one of claims 1 to 7, **characterized in that** the sealing device effects sealing of an electric cable (2) relative to a cable gland (13).

9. Sealing device according to claim 8, **characterized in that** the cable gland (13) is disposed on the housing (3) of a plug-in connector.

10. Sealing device according to any one of claims 1 to 9, **characterized in that** the dimensions of the line (2), the seal (5) and the line duct (13) are so selected that through their connection in each case an interference fit is produced.

11. Plug-in connector for connecting an electric cable (2) to a mating plug-in connector, wherein the plug-in connector comprises a housing (3) with a line duct (13), **characterized in that** for sealing the electric cable (2) relative to the line duct (13) a sealing device according to any one of claims 1 to 10 is provided.

12. Plug-in connector according to claim 11, **characterized in that** the plug-in connector together with a mating plug-in connector forms a sealed connection

## Patentansprüche

1. Dichtungseinrichtung zum Abdichten einer Leitung (2) gegenüber einem Leitungskanal (13), wobei die Leitung (2) wenigstens teilweise in den Leitungskanal (13) eingeführt werden kann und eine im Wesentlichen rohrförmige Dichtung (5) zwischen der Leitung (2) und dem Leitungskanal (13) angeordnet ist,
**dadurch gekennzeichnet,**
**dass** die Dichtung (5) an ihrer Innenwand und/oder ihrer Außenwand wenigstens eine elastisch oder plastisch verformbare Dichtlippe (6, 7) zum Abdichten der Dichtung (5) gegenüber der Leitung (2) und/oder dem Leitungskanal (13) umfasst und
**dass** die Dichtung (5) einen Verdrehschutz (9) umfasst, der durch eine gegenseitige Verriegelung (11) zwischen der Dichtung (5) und dem Leitungskanal (13) gebildet wird.

2. Dichtungseinrichtung nach Anspruch 1, **dadurch gekennzeichnet, dass** die Dichtung (5) an ihrer Innenwand mehrere Dichtlippen (6) umfasst, die annähernd in gleichem Abstand angeordnet sind.

3. Dichtungseinrichtung nach einem der Ansprüche 1 oder 2, **dadurch gekennzeichnet, dass** die Dichtung (5) an ihrer Außenwand mehrere Dichtlippen (7) umfasst, die annähernd in gleichem Abstand angeordnet sind.

4. Dichtungseinrichtung nach einem der Ansprüche 1 bis 3, **dadurch gekennzeichnet, dass** die Dichtungseinrichtung eine Druckmutter (1) umfasst, die mit dem Leitungskanal (13) auf eine solche Weise verbunden werden kann, dass die Dichtung (5) gegen die Leitung (2) gepresst wird.

5. Dichtungseinrichtung nach Anspruch 4, **dadurch gekennzeichnet, dass** die Druckmutter (1) ein Gewinde (4) umfasst, das mit dem Leitungskanal (13) verschraubbar ist.

6. Dichtungseinrichtung nach einem der Ansprüche 1 bis 5, **dadurch gekennzeichnet, dass** die Dichtung (5) eine rotationssymmetrische Form hat.

7. Dichtungseinrichtung nach Anspruch 6, **dadurch gekennzeichnet, dass** die Dichtung (5) einen umlaufenden Anschlagvorsprung (10) umfasst, der mit einer Stirnfläche des Leitungskanals (13) in Anlage gebracht werden kann.

8. Dichtungseinrichtung nach einem der Ansprüche 1 bis 7, **dadurch gekennzeichnet, dass** die Dichtungseinrichtung das Abdichten eines elektrischen Kabels (2) gegenüber einer Kabeldurchführung (13) bewirkt.

9. Dichtungseinrichtung nach Anspruch 8, **dadurch gekennzeichnet, dass** die Kabeldurchführung (13) an dem Gehäuse (3) eines Steckverbinders angeordnet ist.

10. Dichtungseinrichtung nach einem der Ansprüche 1 bis 9, **dadurch gekennzeichnet, dass** die Abmessungen der Leitung (2), der Dichtung (5) und des Leitungskanals (13) so gewählt sind, dass durch ihre Verbindung in jedem Fall eine Presspassung erzeugt wird.

11. Steckverbinder zum Verbinden eines elektrischen Kabels (2) mit einem passenden Steckverbinder, wobei der Steckverbinder ein Gehäuse (3) mit einem Leitungskanal (13) umfasst, **dadurch gekennzeichnet, dass** zum Abdichten des elektrischen Kabels (2) gegenüber dem Leitungskanal (13) eine Dichtungseinrichtung nach einem der Ansprüche 1 bis 10 bereitgestellt wird.

12. Steckverbinder nach Anspruch 11, **dadurch gekennzeichnet, dass** der Steckverbinder zusammen mit einem passenden Gegensteckverbinder eine abgedichtete Verbindung bildet.

## Revendications

1. Dispositif d'étanchéité pour établir l'étanchéité d'une conduite (2) par rapport à un canal de conduite (13), dans lequel la conduite (2) peut être introduite au moins partiellement dans le canal de conduite (13), un joint pratiquement tubulaire (5) étant agencé entre la conduite (2) et le canal de conduite (13) ;
**caractérisé en ce que** :
le joint d'étanchéité (5) comprend sur sa paroi interne et/ou sur sa paroi externe au moins une lèvre d'étanchéité à déformation élastique ou plastique (6, 7), pour établir l'étanchéité du joint d'étanchéité (2) par rapport à la conduite (2) et/ou au canal de conduite (13) ; et
le joint d'étanchéité (5) comprend un élément anti-rotation (9) formé par un verrouillage mutuel (11) entre le joint d'étanchéité (5) et le canal de conduite (13).

2. Dispositif d'étanchéité selon la revendication 1, **caractérisé en ce que** le joint d'étanchéité (5) comprend sur sa paroi interne plusieurs lèvres d'étanchéité (6), agencées à des distances pratiquement égales.

3. Dispositif d'étanchéité selon les revendications 1 ou 2, **caractérisé en ce que** le joint d'étanchéité (5) comprend sur sa paroi externe plusieurs lèvres d'étanchéité (7), agencées à des distances pratiquement égales.

4. Dispositif d'étanchéité selon l'une quelconque des revendications 1 à 3, **caractérisé en ce que** le dispositif d'étanchéité comprend un écrou à vissage (1) pouvant être connecté au canal de conduite (13) de sorte que le joint d'étanchéité (5) est pressé contre la conduite (2).

5. Dispositif d'étanchéité selon la revendication 4, **caractérisé en ce que** l'écrou à vissage (1) comprend un filet (4) pouvant être connecté par vis au canal de conduite (13).

6. Dispositif d'étanchéité selon l'une quelconque des revendications 1 à 5, **caractérisé en ce que** le joint d'étanchéité (5) a une forme symétrique en rotation.

7. Dispositif d'étanchéité selon la revendication 6, **caractérisé en ce que** le joint d'étanchéité (5) comprend une saillie d'arrêt circonférentielle (10) pouvant buter contre une face d'extrémité du canal de conduite (13).

8. Dispositif d'étanchéité selon l'une quelconque des revendications 1 à 7, **caractérisé en ce que** le dispositif d'étanchéité produit l'étanchéité d'un câble électrique (2) par rapport à un presse-étoupe du câble (13).

9. Dispositif d'étanchéité selon la revendication 8, **caractérisé en ce que** le presse-étoupe du câble (13) est agencé sur le boîtier (3) d'un connecteur enfichable.

10. Dispositif d'étanchéité selon l'une quelconque des revendications 1 à 9, **caractérisé en ce que** les dimensions de la conduite (2), du joint d'étanchéité (5) et du canal de conduite (13) sont sélectionnées de sorte que leur connexion génère dans chaque cas un ajustement serré.

11. Connecteur enfichable pour connecter un câble électrique (2) à un connecteur enfichable complémentaire, dans lequel le connecteur enfichable comprend un boîtier (3) avec un canal de conduite (13), **caractérisé en ce que** un dispositif d'étanchéité selon l'une quelconque des revendications 1 à 10 est fourni pour établir l'étanchéité du câble électrique (2) par rapport au canal de conduite (13).

12. Connecteur enfichable selon la revendication 11, **caractérisé en ce que** le connecteur enfichable forme ensemble avec un connecteur enfichable complémentaire une connexion étanche.
